# EUROPEAN PATENT APPLICATION

(11) **EP 1 098 381 A1**
(43) Date of publication of application: **09.05.2001**
(21) Application number: 99923999.9
(22) Date of filing: 10.06.1999
(51) Int. Cl.: H01M 8/24

(54) **HIGH POLYMER ELECTROLYTE FUEL CELL**

(30) Priority: 15.06.1998 JP 16663698
(71) Applicant: MATSUSHITA ELECTRIC INDUSTRIAL CO., LTD., Kadoma-shi, Osaka 571-8501 (JP)
(72) Inventor: HATOH, Kazuhito, Daito-shi, Osaka 574-0076 (JP); YASUMOTO, Eiichi, Katano-shi, Osaka 576-0021 (JP); NISHIDA, Kazufumi, R.202, Moriguchi-shi, Osaka 570-0016 (JP); GYOTEN, Hisaaki, Shijonawate-shi, Osaka 575-0013 (JP)
(74) Representative: Leson, Thomas Johannes Alois, Dipl.-Ing.
(86) International application number: JP9903124
(87) International publication number: WO9966580

(57) **Abstract**

The present invention provides a polymer electrolyte fuel cell wherein a unit cell composed of a polymer electrolyte membrane, a cathode and an anode each having a catalyst reaction layer and disposed across the polymer electrolyte, a separator having a means for supplying a fuel gas to the anode and a separator having a means for supplying an oxidant gas to the cathode, a current collector plate, an insulating plate, and an end plate are laminated, the polymer electrolyte fuel cell being installed, inside the end plates disposed on both ends of the polymer electrolyte fuel cell, or between the insulating plate and either the current collector plate or the end plate, with a total heat exchanger for concurrently moving heat and humidity from an discharged gas toward the fuel gas and oxidant gas. This structure enables efficient use of cooling water after use thereby facilitating realization of a polymer electrolyte fuel cell having a compact internal total heat exchanger.

## Description

### Technical Field

The present invention relates to a polymer electrolyte fuel cell.

### Background Art

Any conventional solid polymer electrolyte fuel cell (hereinafter referred to as "PEFC") is composed of a proton-conductive solid polymer electrolyte thin membrane, electrodes as the cathode and the anode, gaskets each being located in the periphery of the respective electrode, carbon or metal bipolar (separator) plate, and a cooling plate.

A catalyst reaction layer of the electrode which contributes to battery reaction is generally composed of a mixture obtained by mixing a noble metal catalyst carrying carbon powder with a proton-conductive polymer electrolyte. In addition, a fluorocarbon polymer compound such as polytetrafluoroethylene (PTFE) may be added to the above-mentioned mixture as a water repellent if occasion demands. Each electrode is formed by connecting the above-mentioned catalyst reaction layer to a gas diffusion layer.

The electrodes thus formed are used as the anode and the cathode and are combined with a solid polymer electrolyte membrane to constitute a basic part of a battery.

Concerning the anode and the cathode, when pure hydrogen is used as a fuel, then those having the same structure can be used. However, when a reformed hydrogen-rich gas which can be obtained by reforming a hydrocarbon fuel as the fuel, the noble metal catalyst is poisoned by the carbon dioxide (CO) contained in the reformed gas. Therefore, in order to reduce such poisoning, addition of ruthenium to only the anode has been proposed. Furthermore, since the poisoning effect of CO on the reaction catalyst layer of the electrodes is alleviated at higher temperatures. PEFC is generally driven at a relatively high temperature around 70 to 90 °C when any reformed gas is used as the fuel.

On the other hand, the fluorocarbon polymer compound containing a sulfone group has generally been used as the electrolyte constituting the solid polymer electrolyte membrane. The electrolyte exerts protonic conductivity when it contains water and, therefore, it is necessary to constantly secure water in the electrolyte whenever PEFC is operated. Since water-contained electrolyte has strong acidity, any part which is in direct contact with the electrolyte is required to have acid resistance.

Since the above-mentioned electrolyte exerts its function when it contains water, it is necessary to supply to PEFC a fuel gas or air which has been humidified to have a dew point at an almost equal temperature to an operating temperature of PEFC whenever PEFC is to be operated. Particularly, control of humidity of the gas (fuel gas and oxidant gas such as air) to be supplied becomes significant as the operating temperature is elevated.

Here, a comparison of the degree of humidification between fuel gas and air shows that the degree of humidification of air is usually greater than that of fuel gas due to a greater supplied amount of fuel gas to PEFC than that of air.

A common conventional measure for humidifying the gas supplied to PEFC has been a method which humidifies any supplied gas by means of cooling water for cooling PEFC. If the PEFC is driven at an operating temperature of 80 °C, the temperature of the cooling water which will be discharged from PEFC is adjusted at 83 °C by, for example, introducing cooling water at 78 °C into PEFC while controlling the flow rate of the cooling water.

At that time, since the temperature of the cooling water discharged from PEFC is basically almost the same as the operating temperature of the PEFC, a transition of the heat and humidity by total heat exchange between the discharged cooling water and the supplied gas may enable formulation of a supplied gas having a closer dew point to the operating temperature of the PEFC.

As the method of total heat exchange as mentioned above, there has been a proposed method of total heat exchange between the discharged cooling water and supplied gas via a membrane similar to the solid polymer electrolyte membrane.

However, the use of an electric-power generating system by PEFC as cogeneration system fails to provide a sufficient heat source, even when only cooling water after cooling the PEFC is used as the total heat exchange source between the cooling water and supplied gas.

Moreover, the almost equal temperature of the water discharged from PEFC to the operating temperature of PEFC may suggest the use of the discharged water as the heat source of cogeneration system. In this case, however, heat exchange must be performed between the discharged water and supplied gas. Heat exchange between discharged warm water and supplied gas necessitates liquid-gas heat exchange. This inevitably requires an increase of the scale of heat exchanger and poses a problem of impaired efficiency of heat exchange.

Under the circumstance, an object of the present invention is to facilitate efficient total heat exchange for transferring heat and humidity between the gas discharged from PEFC and the gas supplied to PEFC.

### Disclosure of Invention

In order to solve the problems as mentioned above, the present invention adopts the below-mentioned structure for a polymer electrolyte fuel cell wherein a unit cell composed of a polymer electrolyte membrane, an anode and a cathode each having a catalyst reaction layer and disposed across the above-mentioned polymer electrolyte membrane, a separator having a means for supplying a fuel gas (hydrogen gas, for example) toward the anode, and another separator having a means for supplying an oxidant gas (air, for example) toward the cathode, a current collector plate, an insulating plate and an end plate are laminated.

Namely, a total heat exchanger for concurrently transferring heat and humidity from the gas to be discharged toward the fuel gas and oxidant gas to be supplied is installed inside the end plates located at both ends of the above-mentioned polymer electrolyte fuel cell or between the above-mentioned insulating plate and either the above-mentioned current collector plate or the above-mentioned end plate.

At that time, total heat exchange for transferring heat and humidity between the oxidant gas supplied to the cathode and the gas discharged from the cathode is effective.

In addition, the above-mentioned total heat exchange is desirably performed via a polymer electrolyte membrane having a thickness of 25µm or less.

The "total heat exchange" referred to in the present description means transfer of heat and humidity (water vapor) from one medium toward the other medium.

### Best Mode for Carrying Out the Invention

As discussed above, the present invention installs a total heat exchanger for concurrently transferring heat and humidity from the gas to be discharged from the above-mentioned polymer electrolyte fuel cell toward the fuel gas and oxidant gas to be supplied to the above-mentioned polymer electrolyte fuel cell inside the end plates located at both ends of the polymer electrolyte fuel cell or between the above-mentioned insulating plate and either the above-mentioned current collector plate or the above-mentioned end plate. It is needless to say that the above-mentioned total heat exchanger may be installed between the above-mentioned insulating plates.

This enables another efficient use of the warm water discharged from PEFC in accordance with the present invention as the heat source of a cogeneration system including the above-mentioned PEFC.

Furthermore, by installing a total heat exchanger inside the end plates constituting PEFC, it is possible to reduce or omit pipes for supplying humidified and heated supplied gas (fuel gas and oxidant gas) by the total heat exchanger toward PEFC. This also enables prevention of the decrease in the temperature of the heated fuel gas and oxidant gas during their passage through the pipes.

For example, when the total heat exchanger is installed outside the PEFC, It is necessary to keep warm the pipes connected from the total heat exchanger to the PEFC. The need of heat preservation poses problems of complicated structure of the PEFC and cost increase. Moreover, even if the temperature is kept warm, decreases in the temperature on the path of the pipes are not exempt. Such decrease in the temperature may sometimes result in condensation of the humidified fuel gas and air and liquefaction of water vapor which may in turn cause a supply of misty water to the PEFC. When such misty water is supplied to PEFC together with the fuel gas and oxidant gas, there is produced a problem that the electrode surfaces become suffocative (oxygen-deficient) temporarily when the misty water flows on the electrode surfaces of the PEFC, thereby causing an abrupt drop of the voltage of the resultant battery.

According to the present invention, selection of the above-mentioned structure enables to obviate such problems.

At that time, total heat exchange via a membrane similar to the polymer electrolyte membrane, preferably having a thickness of 25µm or less, realizes a more compact internal total heat exchanges. At that time, there is no particular limitation to the upper limit of the membrane thickness if only it is within the range not to damage the effect of the present invention, and 50µm or so, for example, may be acceptable.

In addition, when a reformed gas obtained by reforming some hydrocarbon fuel using water vapor is used as the fuel, the fuel gas may be introduced into PEFC as it is to perform total heat exchange between the oxidant gas and the gas discharged from the PEFC.

Furthermore, when total heat exchange is to be performed via a membrane similar to the polymer electrolyte membrane, having a thickness of 25µm or less, then the membrane exerts a surprisingly superior total heat exchanging capacity but permits permeation of a trace amount of hydrogen gas therethrough. Moreover, it is necessary to adopt a structure avoiding direct contact between the hydrogen gas and air in order to secure safety in the event of membrane damage.

### Examples

In the following, the present invention will be described by way of examples but the present invention is not limited only to those examples.

### Example 1

### (1) Production of unit cell for PEFC

An acetylene black carbon powder carrying thereon 25 wt% platinum particles having an average particle size of about 30 angstroms was used as the electrode catalyst. A dispersion of the catalyst powder in isopropanol was mixed with another dispersion of a powder of perfluorocarbon sulfonic acid represented by the formula (1): 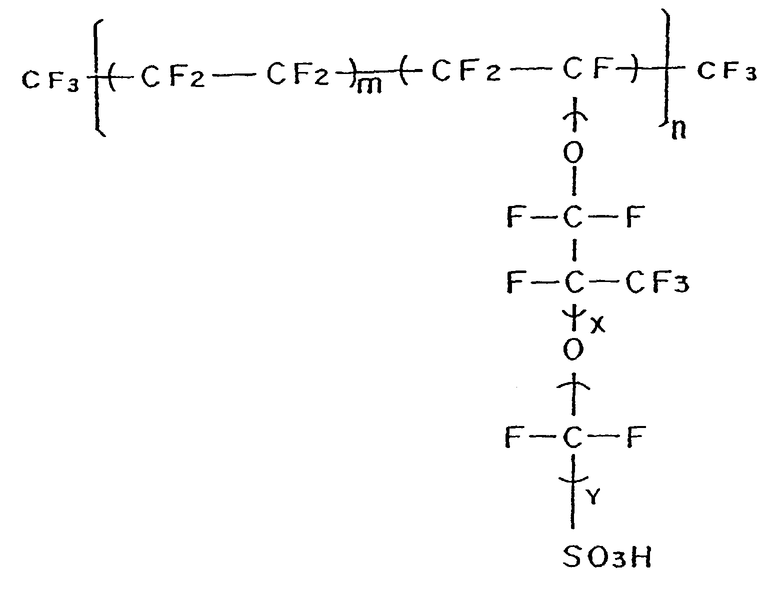 where X = 1, Y = 2, m = 5 to 13.5 and n ≒ 1,000 in ethyl alcohol to prepare a paste. Using this paste thus obtained, a catalyst reaction layer was formed on one surface of a 250µm-thick carbon nonwoven fabric by means of a screen printing method. The amount of platinum contained in the electrode formed with the catalyst reaction layer was adjusted to 0.5 mg/cm² and the amount of perfluorocarbon sulfonic acid to 1.2 mg/cm². The electrodes thus obtained were used as the cathode and the anode.

Next, the above-mentioned electrodes were laminated on both surfaces of a proton-conductive polymer electrolyte membrane having a next larger area than the obtained electrodes so as to make the printed catalyst reaction layer come in contact with the electrolyte membrane and connected by hot press, which gave a membrane/electrode assembly (MEA). Here, the perfluorocarbon sulfonic acid represented by the above-mentioned formula (1) was made into a thin film having a thickness of 25µm and used as the proton-conductive polymer electrolyte.

The above-mentioned MEA was put between two separator plates made of non-porous carbon so that the MEA opposes a gas flow channel formed by the two separator plates, which gave a unit cell for the PEFC in accordance with the present invention.

### (2) Production of internal humidifier

The same membrane as the above-mentioned polymer electrolyte membrane was put between two sheets of 180µm-thick carbon paper having undergone hydrophilicity treatment. Furthermore, the external side of the carbon paper was sandwiched with two thin plates made of SUS316 having an identical gas flow channel to that of the above-mentioned separator plate, which gave a unit total heat exchange internal humidifier. 40 pieces of the unit total heat exchange internal humidifier was successively laminated in 40 layers and the resultant internal humidifier was used as total heat exchanger.

Among the 40 layers of the total heat exchange internal humidifier obtained by laminating 40 unit humidifiers, 20 layers were used as an oxidant gas humidifier and the remaining 20 layers as a fuel gas humidifier. A total heat exchange plate which partitions the oxidant gas humidifying unit humidifier from the fuel gas humidifying unit humidifier was alternately laminated one by one. Similar to the oxidant gas, the fuel gas was given the structure permitting total heat exchange with the exhaust gas.

In addition, the above-mentioned internal humidifier was formed to have the following mechanism. Namely, the oxidant gas supplied to the PEFC first enters the above-mentioned internal humidifier in parallel with the gas flow channel located between the above-mentioned membrane and one of the above-mentioned thin plates. Then, the oxidant gas emerging from the above-mentioned internal humidifier is supplied back to the PEFC and the oxidant gas discharged from the PEFC enters the above-mentioned internal humidifier in parallel with the gas flow channel located between the above-mentioned membrane and the other of the above-mentioned thin plates and is discharged.

### [Evaluation]

Here, the total heat exchanging ability of the total heat exchange internal humidifier obtained in the above-mentioned manner was measured and evaluated before it is assembled into the PEFC in accordance with the present invention.

Using dry air A having a temperature of 28 °C and a dew point of -28 °C as the air supplied to the inlet, total heat exchange was performed by supplying air B having a temperature of 75 °C and a dew point of 75 °C mimicking battery exhaust gas to the introducing side of the air of the exhausted gas from the battery.

The result showed that air A at the inlet of the above-mentioned internal humidifier was heated and humidified but the air had a temperature of 65 °C and a dew point of 65 °C at the outlet of the above-mentioned internal humidifier. Furthermore, air B discharged from the above-mentioned internal humidifier was lowered in temperature and dehumidified, which has been converted to an air having a temperature of 56 °C and a dew point of 52 °C.

### (3) Production of PEFC

100 Pieces of the unit cell produced in the above-mentioned (1) was successively laminated in 100 layers, and the resultant laminated battery was disposed, on its both sides, with a current collector plate having a gas manifold hole and a cooling water manifold hole each as required. One of the current collector plates was mounted, on its external side, the total heat exchange internal humidifier produced in the above-mentioned (2).

Next, the laminated battery installed with the above-mentioned internal humidifier was attached with, on its both surfaces, an insulating plate equipped with necessary gas manifold through hole and cooling water manifold through hole and an end plate. Furthermore, using a bolt, a spring and a nut, the laminated battery was squeezed, from the outside of the end plates on the both sides, at a pressure of 20 kg/cm² with respect to the electrode area, which gave a PEFC of the present invention.

### [Evaluation]

While holding the PEFC produced in the above-mentioned manner at 75 °C by feeding cooling water thereto, the once dry but now humidified and heated hydrogen gas by the above-mentioned internal humidifier was supplied to the anode as a fuel gas and the once dry but now humidified and heated air by the above-mentioned internal humidifier was supplied to the cathode as an oxidant gas. This produced a battery voltage of 49 V during no load.

In addition, the PEFC was used to perform a consecutive electric-power generation test under conditions of fuel utilization of 80%, oxygen utilization of 40% and current density of 0.7 A/cm², which showed that the PEFC permitted generation of electric power while preserving a battery voltage of 31 V or more over longer than 5,000 hours.

Even when the flow rate of the cooling water at that time was adjusted so that the discharged cooling water had a temperature of 85 °C at the outlet of the PEFC, the PEFC continued to operate with no problem. Namely, it was confirmed that the discharged warm water can be effectively used as a heat source of cogeneration system and so on separately.

### Industrial Applicability

As discussed above, the present invention facilitates a separate use of the cooling water after use, as a heat source for cogeneration system, by installing a total heat exchanger which concurrently exchanges heat and humidity between the fuel gas and the oxidant gas each supplied to a polymer electrolyte fuel cell, inside end plates constituting the above-mentioned fuel cell. The use of an identical membrane with the electrolyte membrane constituting the above-mentioned fuel cell also enables realization of a more compact internal total heat exchanger.

## Claims

1. A polymer electrolyte fuel cell comprising a unit cell composed of a polymer electrolyte membrane, a cathode and an anode each having a catalyst reaction layer and disposed across said polymer electrolyte, a separator having a means for supplying a fuel gas to said anode, a separator having a means for supplying an oxidant gas to said cathode, a current collector plate, an insulating plate and an end plate laminated,
said fuel cell further comprising a total heat exchanger for concurrently moving heat and humidity from an discharged gas toward said fuel gas and oxidant gas being installed inside the end plates disposed on both ends of said polymer electrolyte fuel cell, or between said insulating plate and either said current collector plate or said end plate.

2. The polymer electrolyte fuel cell in accordance with claim 1, wherein said total heat exchange is effected between the fuel gas supplied to said cathode and the gas discharged from said cathode.

3. The polymer electrolyte fuel cell in accordance with claim 1, wherein said total heat exchange is effected via a polymer electrolyte membrane having a thickness of 25µm or less.
